(19) Europäisches Patentamt
European Patent Office
Office européen des brevets

(11) **EP 2 444 798 B1**

(12) **FASCICULE DE BREVET EUROPEEN**

(45) Date de publication et mention de la délivrance du brevet:
**16.01.2013  Bulletin 2013/03**

(51) Int Cl.:
***G01N 27/416*** *(2006.01)*

(21) Numéro de dépôt: **11186558.0**

(22) Date de dépôt: **25.10.2011**

(54) **Appareil de mesure du ph sur une large plage de temperature**

Ph-meter mit breitem Temperaturbereich

Wide temperature range ph-meter

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2010  FR 1058752**

(43) Date de publication de la demande:
**25.04.2012  Bulletin 2012/17**

(73) Titulaire: **COMMISSARIAT A L'ENERGIE ATOMIQUE ET AUX ENERGIES ALTERNATIVES 75015 Paris (FR)**

(72) Inventeurs:
• **You, Dominique**
  **91370 VERRIERE LE BUISSON (FR)**
• **Blanchard, Edmond**
  **91220 BRETIGNY S/ORGE (FR)**

(74) Mandataire: **Regimbeau**
  **20, rue de Chazelles**
  **75847 Paris Cedex 17 (FR)**

(56) Documents cités:
**GB-A- 2 044 464    US-A- 4 240 879**

• **ZHANG R.H. ET AL.: "Zr/ZrO2 sensors for in situ measurement of pH in high-temperature and -pressure aqueous solutions", ANALYTICAL CHEMISTRY, vol. 80, no. 8, 15 avril 2008 (2008-04-15) , pages 2982-2987, XP055000630, ISSN: 0003-2700**

**Description**

Domaine technique

L'invention concerne le domaine technique de la mesure du potentiel hydrogène (pH) d'une solution. Plus particulièrement, l'invention concerne le domaine des dispositifs de mesure du pH sur tout le domaine de stabilité de l'eau liquide, par exemple pour une installation nucléaire.

Arrière plan technologique

Le pH mesure l'activité des ions hydrogène H$^+$ en solution, notamment en solution aqueuse où ces ions forment avec l'eau les ions oxonium (aussi appelés hydronium) H$_3$O$^+$. Le pH reflète l'acidité de la solution. Par exemple, dans un milieu aqueux à 25°C, un pH de 7 est dit neutre, un pH supérieur à 7 est dit basique et un pH inférieur à 7 est dit acide.
L'acidité étant un paramètre à prendre en compte dans les mécanismes de corrosion des métaux, et notamment des conduits métalliques des installations industrielles, connaître le pH permet de maîtriser la corrosion de ces conduits.
L'acidité est également un paramètre à prendre en compte dans la solubilité des espèces chimiques en solution aqueuse. C'est pourquoi connaître le pH permet de contrôler le dépôt de composés chimiques sur les surfaces dû à la cristallisation de ces composés à certains pH. Ainsi, il est possible, par exemple, d'éviter l'encrassement des surfaces et le colmatage des générateurs de vapeur.
Enfin, certains procédés industriels nécessitent un fonctionnement dans une plage limitée de pH et donc une mesure du pH.
Les dispositifs de mesure du pH les plus répandues sont des dispositifs à base de membrane de verre. Ces dispositifs de mesure ne fonctionnent qu'à des températures inférieures à 100°C.
D'autres dispositifs de mesure peuvent fonctionner jusqu'à 280°C. Ce sont des dispositifs couplant, d'une part, une électrode de référence Ag/AgCl avec un corps d'électrode en polymère, et d'autre part, une électrode de platine plongée dans la solution dont le pH doit être mesuré. La stabilité thermique du sel AgCl et les températures de fusion des polymères utilisés pour fabriquer le corps d'électrode imposent la limite d'utilisation à 280°C. De plus, la présence éventuelle de chlorure peut endommager les circuits métalliques à base de fer et celle de l'argent est extrêmement nuisible pour les circuits nucléaires.
Des dispositifs de mesure fonctionnant au-delà de 280°C, tel que décrit dans le document GB 2 044 464, existent. Par exemple, les dispositifs à membrane en oxyde de zirconium yttriée fonctionnent au-delà de 300°C. Cependant, ils ne permettent pas de descendre en deçà des 300°C car la diffusion de l'oxygène dans l'oxyde décroît de façon exponentielle avec la température. La diffusion de l'oxygène est insuffisante pour faire des mesures fiables en dessous d'environ 300°C. Ces dispositifs de mesure ne mesurent pas non plus l'activité des ions hydronium de la solution mais la pression partielle du dioxygène.

Présentation

Un objectif de l'invention est de pallier au moins un des inconvénients de l'art antérieur présentés ci-dessus.
Pour cela, l'invention propose un dispositif de mesure pour la mesure du pH d'une solution sous mesure comprenant :

- une cellule de référence comportant :
- une cuve remplie d'une solution d'électrolytes ;
- une électrode de référence en platine platiné plongée dans la cuve ;
- une cellule de mesure comportant :
- une électrode de mesure en platine platiné à plonger dans la solution sous mesure ;
- un régulateur de pression de fluide pour assurer une même pression dans la cellule de référence et la cellule de mesure

caractérisée en ce que le dispositif de mesure comprend en outre :

- un régulateur de température pour assurer une même température dans la cellule de référence et la cellule de mesure ;
- un régulateur de pression partielle pour assurer une même pression partielle de dihydrogène dans la cellule de référence et la cellule de mesure.

Un avantage de ce dispositif de mesure est de ne pas limiter la plage d'utilisation de température en deçà de 280°C tout en permettant une mesure directe de l'activité des ions hydronium.

D'autres caractéristiques optionnelles et non limitatives sont :

- le régulateur de température comprend un thermomètre de référence plongé dans la solution d'électrolytes, un thermomètre de mesure à mettre en contact avec la solution sous mesure, et un comparateur de température pour comparer les températures mesurées par les thermomètres de référence et de mesure ;
- le régulateur de température comprend en outre au moins un élément de chauffe pour chauffer la solution d'électrolyte ou la solution sous mesure en fonction du résultat de la comparaison réalisée par le comparateur de température ;
- le dispositif de mesure comprend en outre une arrivée de dihydrogène gazeux dans la solution d'électrolytes et une arrivée de dihydrogène gazeux dans la solution sous mesure ;
- le régulateur de pression partielle comprend une vanne placée sur chacune des arrivées de dihydrogène gazeux de manière à s'ouvrir quand la pression partielle de dihydrogène dans la solution d'électrolytes, respectivement la solution sous mesure, est inférieure à une pression partielle de consigne ;
- le régulateur de pression partielle comprend en outre un comparateur, pour chacune des vannes, pour comparer la pression partielle de dihydrogène dans la solution d'électrolytes, respectivement la solution sous mesure, à la pression partielle de consigne et pour commander l'ouverture de la vanne en fonction du résultat de la comparaison ;
- le régulateur de pression de fluide comprend un manomètre de référence, un manomètre de mesure, une vanne de sortie et un comparateur de pression de fluide pour comparer la pression de fluide de la cuve à celle de la solution et pour commander en conséquence la vanne de sortie ; et
- le dispositif de mesure comprend en outre un régulateur de force ionique pour assurer une même force ionique dans la cellule de référence et la cellule de mesure.

Présentation des dessins

D'autres objectifs, caractéristiques et avantages apparaîtront à la lecture de la description détaillée qui suit, en référence aux dessins donnés à titre illustratif et non limitatif, parmi lesquels :

- la figure 1 illustre schématiquement un exemple de réalisation du dispositif de mesure de pH objet de l'invention ;
- la figure 2 illustre schématiquement une électrode en platine platiné utilisée dans le dispositif de mesure de la figure 1 ;
- les figures 3a et 3b montrent l'influence de l'écoulement sur le potentiel mesuré par une électrode de platine, respectivement quand l'électrode n'est pas platinée et quand l'électrode est platinée ;
- la figure 4 montre un exemple de réalisation d'un régulateur de pression partielle utilisé dans le dispositif de mesure de la figure 1 ; et
- la figure 5 montre un exemple de réalisation d'un régulateur de force ionique utilisé dans le dispositif de mesure de la figure 1.

Description détaillée

Dans la suite de la description, on entendra par thermomètre tout dispositif permettant de mesurer une température et par manomètre tout dispositif permettant de mesurer une pression.

*Dispositif de mesure du pH*

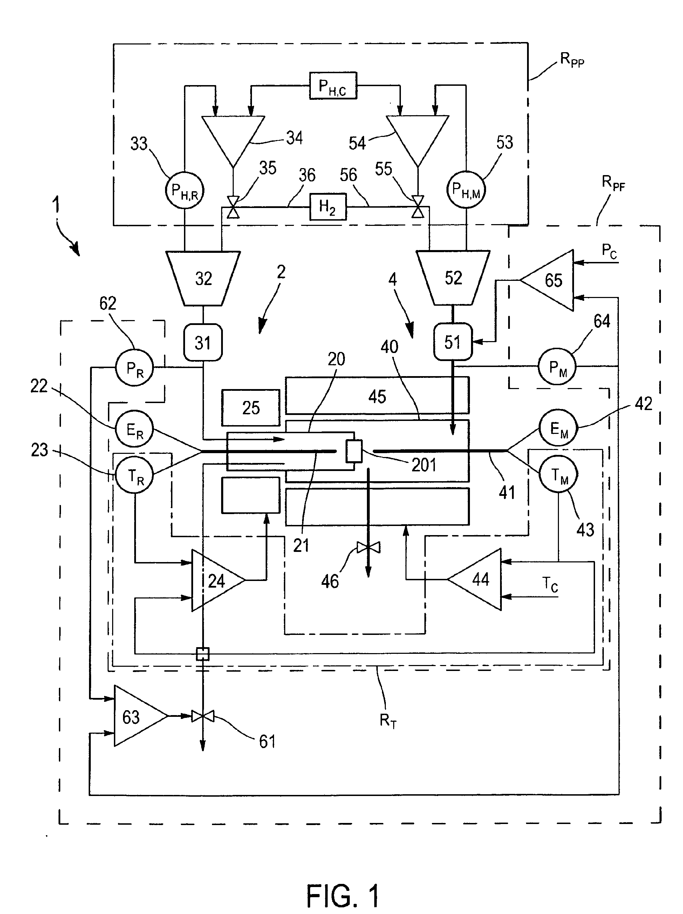

En référence à la figure 1, un dispositif de mesure du pH d'une solution sous mesure dont on souhaite connaître le pH est ci-après décrit en détail.

Le dispositif de mesure **1** comprend une cellule de référence **2** et une cellule de mesure **4**.

La cellule de référence **2** comporte une électrode de référence **21** et une cuve **20** remplie d'une solution d'électrolytes, dans laquelle plonge l'électrode de référence **21**. La cuve **20** comprend à son extrémité un filtre fritté **201** d'oxyde isolant microporeux qui laisse passer les ions hydrogènes de la solution d'électrolytes à l'intérieur de la cuve à la solution sous mesure et vice et versa.

Le filtre fritté **201** peut comprendre des pores dont la taille est de 15 kDa à 1500 kDa. Les matériaux pouvant être utilisés sont le dioxyde de zirconium ($ZrO_2$), le dioxyde de titane ($TiO_2$), le pentoxyde de tantale ($Ta_2O_5$) et le pentoxyde de niobium ($Nb_2O_5$).

La solution d'électrolytes est adaptée en fonction de la nature de la solution sous mesure.

L'électrode de référence **21** est avantageusement en platine platiné. La cellule de référence **2** comprend également un réservoir **32** rempli de la solution d'électrolytes et une pompe de référence **31** pour pomper la solution d'électrolytes du réservoir **32** vers la cuve **20**. La cuve **20** est en un matériau adapté, par exemple des alliages à base de zirconium Zr, de titane Ti, de tantale Ta ou de niobium Nb ayant été préalablement oxydés sous air dans un four entre 500°C et 600°C durant au moins quarante-huit heures.

La cellule de mesure **4** comporte une électrode de mesure **41**, avantageusement en platine platinée. Cette électrode de mesure **41** est à plonger dans la solution sous mesure. La cellule de mesure **4** comprend également un réservoir **52** rempli de la solution sous mesure et une pompe **51** pour pomper la solution du réservoir **52** dans un récipient **40** dans lequel est plongée l'électrode de mesure **41** et la cuve **20**. Le récipient **40** peut être également en alliage à base de zirconium Zr, de titane Ti, de tantale Ta ou de niobium Nb tout autre matériau métallique adapté, du point de vu de la corrosion, à la solution sous mesure.

Les électrodes de référence **21** et de mesure **41** jouent le rôle de potentiomètres **22** et **42** pour mesurer respectivement un potentiel électrique de référence $E_R$ de la solution de référence dans la cuve **20** et un potentiel électrique de mesure $E_M$ de la solution sous mesure dans le récipient **40**. Ces électrodes **21** et **41** sont en platine platiné, encore appelé noir de platine, qui est du platine microporeux. Le platine microporeux permet d'obtenir des mesures de potentiels indépendantes de l'écoulement qui a lieu autour des électrodes à partir d'un flux d'écoulement donné.

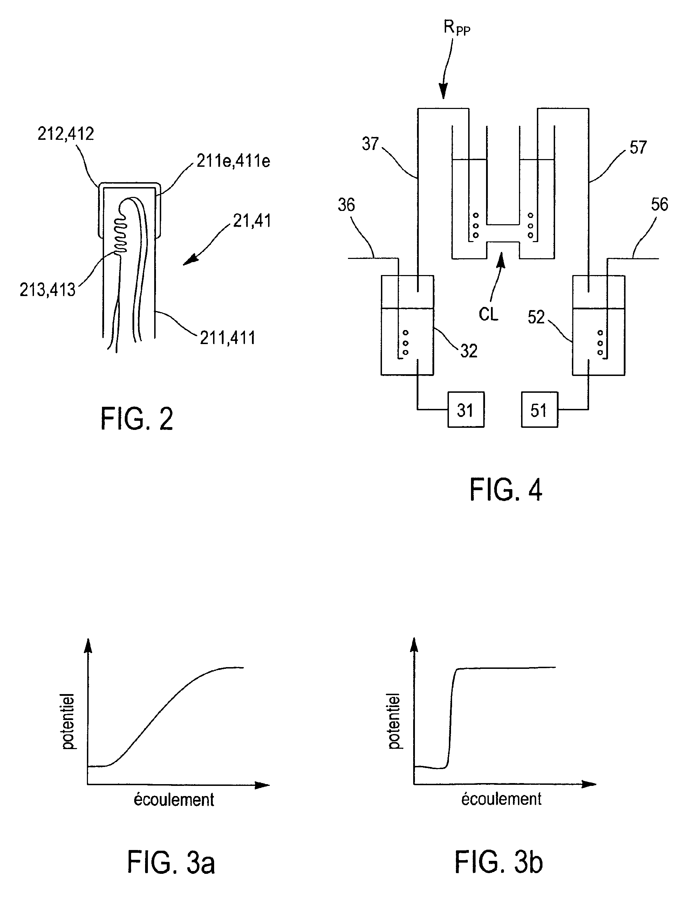

On voit sur la figure 3a que lorsque l'électrode est simplement en platine, il existe une plage où le potentiel mesuré dépend de l'écoulement du fluide autour de l'électrode. Par contre, comme le montre la figure 3b, lorsque l'électrode est en platine platiné, le potentiel mesuré, au-delà d'un flux d'écoulement donné, est constant.

Le dispositif de mesure **1** comprend en outre un régulateur de température $R_T$, pour assurer une température sensiblement identique dans la cuve **20** et le récipient **40**.

Le régulateur de température $R_T$ comprend un thermomètre de référence **23** plongé dans la cuve **20** remplie d'électrolytes, un thermomètre de mesure **43** à mettre en contact avec la solution sous mesure dans le récipient **40**, et un comparateur de température **24**. Le comparateur de température **24** compare les températures $T_R$, $T_M$ mesurées par les thermomètres de référence et de mesure **23**, **43**.

Ainsi, on réalise une mesure directe des températures $T_R$ et $T_M$.

Le thermomètre **23**, respectivement **43**, et les électrodes **21**, respectivement **41**, peuvent former un seul et même élément (voir figure 2). Dans ce cas, l'électrode **21** ou **41** est formée par une gaine **211**, **411** en platine fermée à son extrémité **211e**, **411e** de manière étanche et revêtue à cette extrémité de noir de platine **212**, **412** par voie électrochimique. Un thermomètre **213**, **413** à résistance de platine industrielle est disposé à l'intérieur de la gaine **211**, **411**. Ainsi, une seule pièce possède une double fonctionnalité : la mesure de température et du potentielle.

Le régulateur de température $R_T$ comprend en outre au moins un élément de chauffe **25**, **45** commandé par le comparateur de température **24** pour chauffer la cellule de référence **2** ou la cellule de mesure **4** en fonction du résultat de la comparaison réalisée par le comparateur de température **24**.

L'élément de chauffe peut être composé de deux fours : un premier four **25** entourant la cellule de référence **2** et un deuxième four **45** entourant le récipient **40** rempli de la solution sous mesure dans laquelle est plongée l'électrode de mesure **41**.

Dans ce dernier cas, le comparateur de température **24** commande le premier four **25**. Un autre comparateur de température **44** est prévu et compare la température $T_M$ mesurée par le thermomètre de mesure **43** à une température de consigne $T_C$. Ce comparateur de température **44** commande le four **45** entourant le récipient **40** rempli de la solution, permettant de commander la température régnant dans la solution sous mesure pour que celle-ci soit sensiblement égale à la température de consigne $T_C$. Indirectement, via le comparateur de température **24**, cela permet également de commander la température $T_R$ de la cuve **20** pour que celle-ci soit sensiblement égale à la température $T_M$ de la solution et donc à la température de consigne $T_C$.

Le dispositif de mesure **1** comprend en outre une arrivée **36** de dihydrogène gazeux dans la cuve **20** de la cellule de référence **2** et une arrivée **56** de dihydrogène gazeux dans la solution sous mesure, dans les deux cas, éventuellement à travers un réservoir de solution d'électrolyte **32** du côté de la cuve **20** et de solution sous mesure **52** du côté de la mesure.

Le dispositif de mesure **1** comprend encore un régulateur de pression partielle $R_{PP}$ pour assurer une pression partielle de dihydrogène sensiblement identique du côté de la cellule de référence **2** et de la cellule de mesure **4**, le cas échéant dans les réservoirs **32** et **52**.

Le régulateur de pression partielle $R_{PP}$ peut comprendre une vanne **35**, **55** placée sur chacune des arrivées **36**, **56** de dihydrogène gazeux de manière à s'ouvrir quand la pression partielle de dihydrogène du côté de la cuve **20**, respectivement la solution sous mesure, est inférieure à une pression partielle de consigne $P_{H,C}$.

Le régulateur de pression partielle $R_{PP}$ comprend en outre un comparateur **34**, **54**, pour chacune des vannes **35**, **55**. Le comparateur **34** compare la pression partielle de dihydrogène $P_{H,R}$ du côté de la cuve **20** à la pression partielle de consigne $P_{H,C}$ et commande l'ouverture de la vanne **35** en fonction du résultat de la comparaison. Pareillement, le comparateur **54** compare la pression partielle de dihydrogène $P_{H,M}$ du côté de la solution à la pression partielle de consigne $P_{H,C}$ et commande l'ouverture de la vanne **55** en fonction du résultat de la comparaison.

Si la pression partielle de dihydrogène $P_{H,R}$ ou $P_{H,M}$ est inférieure à la pression partielle de consigne $P_{H,C}$, le comparateur correspondant **34**, **54** ouvre la vanne correspondante **35**, **55** (si celle-ci était fermée) ou augmente l'ouverture de celle-ci (si la vanne est graduelle et non binaire). Dans le cas opposé, le comparateur **34** ou **54** ferme la vanne **35** ou **55** afin de couper l'arrivée de dihydrogène dans le réservoir **32** de solution d'électrolyte ou dans le réservoir **52** de la solution sous mesure, ou diminue l'ouverture de la vanne **35** ou **55** pour limiter l'arrivée de dihydrogène.

Dans une variante illustrée par la figure 4, le comparateur de pression partielle $R_{PP}$ peut être un ensemble tuyau-colonne de liquide mettant en communication le ciel gazeux des réservoirs **32** et **52**, respectivement de la solution d'électrolytes et de la solution sous mesure. Le dihydrogène est injecté directement dans les deux réservoirs **32**, **52** par des tuyaux **36** et **56** plongés dans les solutions respectives contenus dans les réservoirs **32** et **52**.

Des sorties gazeuses **37** et **57** sont également prévues, par exemple sous forme de tuyau dont une extrémité aboutit dans le ciel gazeux des réservoirs respectifs **32** et **52**. L'autre extrémité de ces tuyaux est dirigée vers une colonne de liquide CL assurant la même pression (grâce à une hauteur identique de liquide) dans les deux réservoirs **32** et **52**.

Le dispositif de mesure **1** peut comprendre en outre un régulateur de pression de fluide $R_{PF}$ pour assurer sensiblement une même pression de fluide dans la cuve **20** et dans le récipient **40**.

Le régulateur de pression de fluide $R_{PF}$ peut comprendre un manomètre de référence **62**, un manomètre de mesure **64**, une vanne de sortie **61** reliée à la cuve **20** et un comparateur de pression de fluide **63** pour comparer la pression de fluide de la cuve **20** à celle de la solution sous mesure et pour commander en conséquence la vanne de sortie **61** reliée à la cuve **20**. Une même pression dans la cuve **20** et dans le récipient **40** permet d'annuler un potentiel électrique parasite dit « potentiel d'écoulement » induit par un écoulement de liquide entre la cuve **20** et le récipient **40** à travers le filtre fritté **201**.

Le manomètre de référence **62** mesure la pression $P_R$ en sortie de la pompe de référence **31** et le manomètre de mesure **64** mesure la pression $P_M$ en sortie de la pompe **51** de la cellule de mesure **4**. Si la pression $P_R$ est supérieure à la pression $P_M$ alors le comparateur de pression de fluide **63** commande l'ouverture de la vanne de sortie **61** reliée à la cuve **20**, ce qui provoque une diminution de la pression dans la cuve **20**. Dans le cas contraire, le comparateur de pression de fluide **63** commande la fermeture de la vanne de sortie **61**, entraînant l'augmentation de la pression dans la cuve **20** suite à l'injection en continue de la solution de référence par la pompe de référence **31**.

Le régulateur de pression de fluide $R_{PF}$ peut également comprendre un comparateur de pression **65** pour comparer la pression $P_M$ mesurée en sortie de la pompe **51** de la cellule de mesure **4** à une pression de consigne $P_C$. Ce comparateur de pression **65** commande la pompe **51** de la cellule mesure **4** en fonction du résultat de la comparaison. Ainsi, si la pression mesurée $P_M$ est inférieure à la pression de consigne $P_C$, le comparateur de pression **65** commande l'augmentation de la puissance de pompage de la pompe **51** de la cellule de mesure **4**. Dans le cas opposé, le comparateur de pression **65** commande à la pompe **51** de la cellule de mesure **4** de diminuer sa puissance de pompage.

De manière générale, le régulateur de pression de fluide $R_{PF}$ assure une même pression à l'intérieur de la cuve **20** et du récipient **40** pour annuler un écoulement de fluide entre la cuve **20** et le récipient **40**.

Ainsi, dans une variante, le comparateur de pression de fluide **63** peut commander la pompe de référence **31** et le comparateur de pression **65** une vanne de sortie **46** reliée au récipient **40** pour contrôler l'évacuation de la solution sous mesure hors du récipient **40**.

Dans une autre variante, les comparateurs de pression de fluide **63** et de pression **65** commandent respectivement les vannes de sortie **61, 46** reliée à la cuve **20** et au récipient **40**.

Dans une autre variante encore, les comparateurs de pression de fluide **63** et de pression **65** commandent respectivement les pompes **31** et **51** de la cellule de référence **2** et de mesure **4**. On remarquera que dans le dispositif de mesure **1** telle que décrite ci-dessus, sont prévus deux circuits de circulation indépendants, l'un pour la cellule de référence **2** et l'autre pour la cellule de mesure **4**. Ainsi, on évite les contaminations chimiques d'une l'une vers l'autre.

Grâce aux matériaux utilisés, et notamment à l'emploi de deux électrodes à hydrogène, le dispositif de mesure **1** n'a pas de limite d'utilisation dans la plage de température de l'eau liquide, c'est-à-dire entre 0°C et 370°C lorsque la pression dans la cuve **20** et/ou dans le réservoir **40** est supérieure à la pression de saturation à la température considérée. Par exemple, à 300 °C, la pression de vapeur saturante de l'eau est d'environ 86 bars. Le dispositif de mesure de pH peut donc fonctionner pour des pressions supérieures à 86 bars. De plus, la solution peut tout aussi bien être diluée que concentrée, ce qui permet l'utilisation du dispositif de mesure **1** dans les circuits caloporteurs de centrales thermiques conventionnelles ou nucléaires, de production d'électricité tel que les réacteurs à eau pressurisée, réacteurs à eau bouillante, ou de propulsion navale.

La force ionique $\sigma_R$ de la solution de mesure de la cuve **20** est adaptée à la force ionique $\sigma_M$ de la solution sous mesure dans le récipient **40** par l'ajout de sel de fond dissout dans la solution de mesure, comme du chlorure de sodium NaCl ou du nitrate de sodium $NaNO_3$ par exemple.

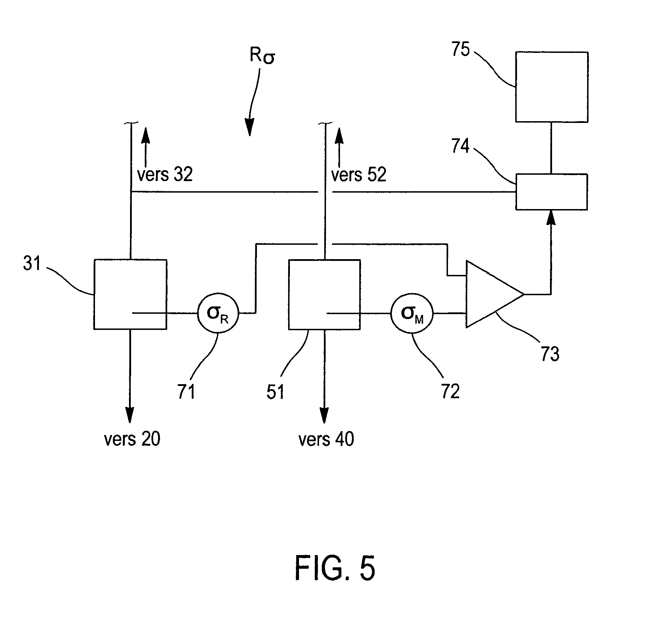

Pour cela, un régulateur de force ionique $R_\sigma$, illustré sur la figure 5, pouvant être utilisé avec le dispositif de mesure **1** décrit ci-dessus, comprend des sondes de force ionique **71**, **72** respectivement pour la mesure des forces ioniques $\sigma_R$, $\sigma_M$ des solutions de référence et sous mesure en amont des cellules de référence **2** et de mesure **4**, un comparateur de force ionique **73** et une pompe **74** reliée à un réservoir **75** contenant un mélange de solution et de sel de fond.

Par exemple, les sondes de force ionique **71** et **72** sont positionnées directement dans les réservoirs de solution de référence **32** et sous mesure **52**.

Avantageusement, pour permettre une boucle de contreréaction avec l'injection d'un mélange de solution et de sel de fond, les sondes de force ionique **71** et **72** peuvent encore être placées entre la cuve **20** et la pompe **31** de la cellule de référence **2** d'une part, et entre le récipient **40** et la pompe **51** de la cellule de mesure **4** d'autre part.

De manière encore plus avantageuse, pour permettre à la fois une boucle de contreréaction avec l'injection d'un mélange de solution et de sel de fond et d'éviter les lieux ou une haute pression règne, les sondes de force ionique **71** et **72** peuvent être positionnées entre le réservoir de référence **32** et la pompe **31** de la cellule de référence **2** d'une part, et entre le réservoir de mesure **52** et la pompe **51** de la cellule de référence **4** d'autre part.

Les sondes de force ionique **71** et **72** peuvent être des conductimètres, par exemple des fils de platine platiné qui sont bien isolés électriquement du matériau métallique des composants du dispositif de mesure **1**.

Les forces ioniques $\sigma_R$, $\sigma_M$ sont ensuite comparées par le comparateur de forces ioniques **73** dont la sortie commande la pompe **74** en fonction du résultat de la comparaison.

Dans une première variante (illustrée sur la figure 5), la pompe **74** du régulateur de force ionique $R_\sigma$ peut être placée entre le réservoir **75** de mélange de solution et de sel de fond et la solution de mesure, par exemple entre le réservoir **32** et la pompe **31** de la cellule de référence **2**, pour amener le mélange de solution (qui est la solution de référence) et de sel de fond du réservoir **75** à la solution de référence.

Dans le cas où la force ionique $\sigma_R$ dans la solution de référence est inférieure à la force ionique $\sigma_M$ dans la solution sous mesure, la pompe **74** est activée. Dans le cas contraire, de l'eau doit être injectée dans la solution de référence trop concentrée.

Dans une autre variante, la pompe **74** du régulateur de force ionique $R_\sigma$ peut être placée entre le réservoir **75** de mélange de solution (qui est la solution sous mesure) et de sel de fond et la solution de mesure, par exemple entre le réservoir **52** et la pompe **51** de la cellule de mesure **4**, pour amener le mélange de solution et de sel de fond du réservoir **75** à la solution de mesure.

De plus, la solution de référence est préparée de manière à disposer au départ d'une solution de référence initialement avec une force ionique supérieure à celle de la solution sous mesure et d'injecter la quantité de sel de fond seulement dans la solution sous mesure pour ramener la valeur de la force ionique de la solution sous mesure à celle de la force ionique de la solution de référence.

Dans le cas où la force ionique $\sigma_M$ dans la solution sous mesure est inférieure à la force ionique $\sigma_R$ dans la solution de référence, la pompe **74** est activée.

*Principe de fonctionnement*

Grâce au dispositif de mesure **1**, on peut mesurer la différence de potentiel entre le potentiel de référence **E$_R$** mesuré par l'électrode de référence **21** et le potentiel de mesure **E$_M$** mesuré par l'électrode de mesure **41** et donc connaître la différence de potentiel entre la solution dans la cuve **20** et la solution sous mesure pour laquelle on souhaite connaître le pH.

La pile formée par le dispositif de mesure **1** est :

$$Pt_R \mid H_{2(g)}/H^+_{(aq)} :: H^+_{(aq)}/H_{2(aq)} \mid Pt_M.$$

De manière générale, la différence de potentiel Δ**E** est donnée par la relation suivante :

$$\Delta E = \frac{RT_M}{F}\ln\frac{a_{H^+_{(aq,M)}}}{\sqrt{\dfrac{p_{H_2,M}}{p^0}}} - \frac{RT_R}{F}\ln\frac{a_{H^+_{(aq,R)}}}{\sqrt{\dfrac{p_{H_2,R}}{p^0}}} + E_j \; ;$$

avec R = 8,314 472 J·mol$^{-1}$·K$^{-1}$, la constante des gaz parfaits ; F = 9,65·10$^4$ C·mol$^{-1}$, la constante de Faraday ; $a_{H+(aq,M)}$ l'activité des ions hydrogène dans la solution sous mesure ; $a_{H+(aq,R)}$ l'activité des ions hydrogène dans la cuve **20**; $p_{H2,M}$ la pression partielle (plus exactement la fugacité) du dihydrogène H$_2$ dans la solution sous mesure dans le récipient **40**; $p_{H2,R}$ la pression partielle (plus précisément la fugacité) du dihydrogène H$_2$ dans la solution de référence dans la cuve **20**; $p^0$ = 1 bar, la pression standard ; $E_j$ *le* potentiel de jonction dans le filtre fritté **201**. Le potentiel de jonction **E$_j$** n'est pas mesurable et est lié à des écarts de température, de pression, de concentration, de force ionique et d'écoulement entre la cuve **20** et le récipient **40**.

Étant donnée que le régulateur de température **R$_T$** maintient les températures **T$_M$** et **T$_R$** égales, la relation précédente se simplifie :

$$\Delta E = \frac{RT}{F} \ln \frac{a_{H^+_{(aq,M)}}}{a_{H^+_{(aq,R)}}} \cdot \sqrt{\frac{p_{H_2,R}}{p_{H_2,M}}} + E_j \quad ;$$

avec $T$ la valeur commune des températures $T_M$ et $T_R$.

Le régulateur de pression partielle $R_{PP}$ maintient les pressions partielles de dihydrogène dans la cuve **20** et la solution sous mesure égales. On a alors la relation simplifiée suivante :

$$\Delta E = \frac{RT}{F} \ln \frac{a_{H^+_{(aq,M)}}}{a_{H^+_{(aq,R)}}} \cdot + E_j \quad ;$$

soit    $pH_M = pH_R - \dfrac{F(\Delta E - E_j)}{RT \ln(10)}$  ;   avec   $pH_M = -\log a_{H^+_{(aq,M)}}$   le pH de la solution sous mesure

et   $pH_R = -\log a_{H^+_{(aq,R)}}$   le pH de la solution d'électrolytes.

Bien que le potentiel de jonction **Ej** ne puisse être mesuré, le dispositif de mesure **1** proposé le minimise par l'annulation des écarts de température (grâce au régulateur de température $R_T$), des écarts de pression (grâce au régulateur de pression de fluide $R_{PF}$), des écarts de force ionique (grâce à l'ajout de sel de fond dans les solutions de référence et sous mesure).

**Revendications**

**1.**  Dispositif de mesure (1) pour la mesure du pH d'une solution sous mesure comprenant :

   - une cellule de référence (2) comportant :

      - une cuve (20) remplie d'une solution d'électrolytes ;
      - une électrode de référence (21) en platine platiné plongée dans la cuve (20) ;

   - une cellule de mesure (4) comportant :

      - une électrode de mesure (41) en platine platiné à plonger dans la solution sous mesure ;
      - un régulateur de pression de fluide ($R_{PF}$) pour assurer une même pression dans la cellule de référence (2) et la cellule de mesure (4);

   **caractérisé en ce que** le dispositif de mesure (1) comprend en outre :

      - un régulateur de température ($R_T$) pour assurer une même température dans la cellule de référence (2) et la cellule de mesure (4) ;
      - un régulateur de pression partielle ($R_{PP}$) pour assurer une même pression partielle de dihydrogène dans la cellule de référence (2) et la cellule de mesure (4)

**2.**  Dispositif de mesure (1) selon la revendication 1, dans lequel le régulateur de température ($R_T$) comprend un thermomètre de référence (23) plongé dans la solution d'électrolytes, un thermomètre de mesure (43) à mettre en contact avec la solution sous mesure, et un comparateur de température (24) pour comparer les températures mesurées ($T_R$, $T_M$) par les thermomètres de référence et de mesure (23, 43).

**3.**  Dispositif de mesure (1) selon la revendication 2, dans lequel le régulateur de température ($R_T$) comprend en outre au moins un élément de chauffe (25, 45) pour chauffer la solution d'électrolyte ou la solution sous mesure en fonction du résultat de la comparaison réalisée par le comparateur de température (24).

**4.** Dispositif de mesure (1) selon l'une des revendications 1 à 3, comprenant en outre une arrivée (36) de dihydrogène gazeux dans la solution d'électrolytes et une arrivée (56) de dihydrogène gazeux dans la solution sous mesure.

**5.** Dispositif de mesure (1) selon la revendication 4, dans lequel le régulateur de pression partielle ($R_{PP}$) comprend une vanne (35, 55) placée sur chacune des arrivées (36, 56) de dihydrogène gazeux de manière à s'ouvrir quand la pression partielle de dihydrogène dans la solution d'électrolytes, respectivement la solution sous mesure, est inférieure à une pression partielle la consigne ($P_{H,C}$).

**6.** Dispositif de mesure (1) selon la revendication 5, dans lequel le régulateur de pression partielle ($R_{PP}$) comprend en outre un comparateur (34, 54), pour chacune des vannes (35, 55), pour comparer la pression partielle de dihydrogène dans la solution d'électrolytes ($P_{PR}$), respectivement la solution sous mesure ($P_{PM}$), à la pression partielle de consigne ($P_{H,C}$) et pour commander l'ouverture de la vanne (35, 55) en fonction du résultat de la comparaison.

**7.** Dispositif de mesure (1) selon l'une des revendications 1 à 6, dans lequel le régulateur de pression de fluide ($R_{PF}$) comprend un manomètre de référence (62), un manomètre de mesure (64), une vanne de sortie (61) et un comparateur de pression de fluide (63) pour comparer la pression de fluide de la cuve (2) à celle de la solution et pour commander en conséquence la vanne de sortie (61).

**8.** Dispositif de mesure (1) selon l'une des revendications 1 à 7, comprenant en outre un régulateur de force ionique pour assurer une même force ionique dans la cellule de référence (2) et la cellule de mesure (4).

**Claims**

**1.** Measuring device (1) for measuring the pH of a solution being measured comprising:

- a reference cell (2) including:

  - a tank (20) filled with an electrolyte solution;
  - a platinized platinum reference electrode (21) immersed in the tank (20);

- a measuring cell (4) including:

  - a platinized platinum measuring electrode (41) to be immersed in the solution being measured;
  - a fluid pressure regulator ($R_{PF}$) to ensure the same pressure in the reference cell (2) and the measuring cell (4);

  **characterized in that** the measuring device (1) also comprises:

  - a temperature regulator ($R_T$) to ensure the same temperature in the reference cell (2) and the measuring cell (4);
  - a partial pressure regulator (Rpp) to ensure the same dihydrogen partial pressure in the reference cell (2) and the measuring cell (4).

**2.** Measuring device (1) according to claim 1, in which the temperature regulator ($R_T$) has a reference thermometer (23) immersed in the electrolyte solution, a measuring thermometer (43) to be placed in contact with the solution being measured, and a temperature comparator (24) to compare the temperatures ($T_R$, $T_M$) measured by the reference and the measuring thermometers (23, 43).

**3.** Measuring device (1) according to claim 2, in which the temperature regulator ($R_T$) also has at least one heating element (25, 45) to heat the electrolyte solution or the solution being measured according to the result of the comparison performed by the temperature comparator (24).

**4.** Measuring device (1) according to one of claims 1 to 3, also comprising an inlet (36) for dihydrogen gas into the electrolyte solution and an inlet (56) for dihydrogen gas into the solution being measured.

**5.** Measuring device (1) according to claim 4, in the which partial pressure regulator (Rpp) has a valve (35, 55) positioned on each of the dihydrogen gas inlets (36, 56) so as to open when the dihydrogen partial pressure in the electrolyte solution, respectively the solution being measured, is below a set partial pressure ($P_{H,C}$).

6. Measuring device (1) according to claim 5, in which the partial pressure regulator ($R_{PP}$) also has a comparator (34, 54), for each of valves (35, 55), to compare the dihydrogen partial pressure in the electrolyte solution ($P_{PR}$), respectively the solution being measured ($P_{PM}$), to the set partial pressure ($P_{H,C}$) and to control the opening of the valve (35, 55) according to the result of the comparison.

7. Measuring device (1) according to one of claims 1 to 6, in which the fluid pressure regulator ($R_{PF}$) has a reference manometer (62), a measuring manometer (64), an outlet valve (61) and a fluid pressure comparator (63) to compare the fluid pressure of the tank (2) to that of the solution and to consequently control the outlet valve (61).

8. Measuring device (1) according to one of claims 1 to 7, also comprising an ionic strength regulator to ensure the same ionic strength in reference cell (2) and the measuring cell (4).

**Patentansprüche**

1. Messvorrichtung (1) zum Messen des pH-Werts einer Messlösung, umfassend:

   - eine Referenzzelle (2) mit:

     • einer Aufnahme (20), die mit einer Elektrolytlösung gefüllt ist;
     • einer Referenzelektrode (21) aus platiniertem Platin, die in die Aufnahme (20) eingetaucht ist;

   - eine Messzelle (4) mit:

     • einer Messelektrode (41) aus platiniertem Platin, die in die Messlösung eingetaucht werden soll;

   - einen Fluiddruckregler ($R_{PF}$), um in der Referenzzelle (2) und der Messzelle (4) ein und denselben Druck sicherzustellen;

   **dadurch gekennzeichnet ist, dass** die Messvorrichtung (1) ferner Folgendes umfasst:

   - einen Temperaturregler ($R_T$), um in der Referenzzelle (2) und der Messzelle (4) ein und dieselbe Temperatur sicherzustellen;
   - einen Partialdruckregler ($R_{PP}$), um in der Referenzzelle (2) und der Messzelle (4) ein und denselben Wasserstoff ($H_2$)-Partialdruck sicherzustellen.

2. Messvorrichtung (1) nach Anspruch 1, wobei der Temperaturregler ($R_T$) ein Referenzthermometer (23), das in die Elektrolytlösung eingetaucht ist, ein Messthermometer (43), das mit der Messlösung in Kontakt gebracht werden soll, und eine Temperaturvergleichseinrichtung (24), um die durch das Referenzthermometer und das Messthermometer (23, 43) gemessenen Temperaturen ($T_R$, $T_M$) zu vergleichen, umfasst.

3. Messvorrichtung (1) nach Anspruch 2, wobei der Temperaturregler ($R_T$) ferner mindestens ein Heizelement (25, 45) umfasst, um die Elektrolytlösung oder die Messlösung in Abhängigkeit von dem Ergebnis des Vergleichs, der durch die Temperaturvergleichseinrichtung (24) durchgeführt wurde, zu erhitzen.

4. Messvorrichtung (1) nach einem der Ansprüche 1 bis 3, ferner umfassend eine Zuleitung (36) von gasförmigem Wasserstoff in die Elektrolytlösung und eine Zuleitung (56) von gasförmigem Wasserstoff in die Messlösung.

5. Messvorrichtung (1) nach Anspruch 4, wobei der Partialdruckregler ($R_{PP}$) ein Ventil (35, 55) umfasst, das an jeder der Zuleitungen (36, 56) von gasförmigem Wasserstoff angeordnet ist, derart, dass es sich öffnet, wenn der Wasserstoff-Partialdruck in der Elektrolytlösung bzw. in der Messlösung niedriger als ein Soll-Partialdruck ($P_{H,C}$) ist.

6. Messvorrichtung (1) nach Anspruch 5, wobei der Partialdruckregler ($R_{PP}$) ferner eine Vergleichseinrichtung (34, 54) für jedes der Ventile (35, 55) umfasst, um den Wasserstoff-Partialdruck in der Elektrolytlösung ($P_{PR}$) bzw. der Messlösung ($P_{PM}$) mit dem Soll-Partialdruck ($P_{H,C}$) zu vergleichen und die Öffnung des Ventils (35, 55) in Abhängigkeit von dem Ergebnis des Vergleichs zu steuern.

7. Messvorrichtung (1) nach einem der Ansprüche 1 bis 6, wobei der Fluiddruckregler ($R_{PF}$) ein Referenzmanometer (62), ein Messmanometer (64), ein Auslassventil (61) und eine Fluiddruck-Vergleichseinrichtung (63), um den Fluiddruck der Aufnahme (2) mit dem der Lösung zu vergleichen und dementsprechend das Auslassventil (61) zu steuern, umfasst.

8. Messvorrichtung (1) nach einem der Ansprüche 1 bis 7, ferner umfassend einen Ionenstärkeregler, um in der Referenzzelle (2) und der Messzelle (4) ein und dieselbe Ionenstärke sicherzustellen.

FIG. 1

FIG. 2

FIG. 4

FIG. 3a

FIG. 3b

FIG. 5

## RÉFÉRENCES CITÉES DANS LA DESCRIPTION

**Documents brevets cités dans la description**

- GB 2044464 A